# EUROPEAN PATENT APPLICATION

(11) **EP 1 052 754 A2**
(43) Date of publication of application: **15.11.2000**
(21) Application number: 00303781.9
(22) Date of filing: 05.05.2000
(51) Int. Cl.: H02G 3/12

(54) **Adjustable two-piece clip for mounting objects on a wall stud**

(30) Priority: 05.05.1999 US 132667 P
(71) Applicant: Thomas & Betts International, Inc., Sparks, Nevada 89431 (US)
(72) Inventor: Pfaller, Mark J., Memphis, TN 38133 (US); Whitehead, James H., Collierville, TN 38017 (US)
(74) Representative: Howick, Nicholas Keith

(57) **Abstract**

An adjustable two-piece clip for mounting an object such as an electrical box on a stud is provided which comprises a first clip part engageable with the stud for securement of the clip to the stud; a second clip part engageable with the first clip part for holding the object on the clip; and at least one support member extending between the second clip part and a surface of the stud for substantially preventing flexing of the clip and inward movement of the object when a force is applied generally inwardly of the object. Also, the leg of the second clip part may be slidable relative to the leg of the first clip part lengthwise of the leg of the first clip part thereby enabling selection of a position of the object being held by the second clip part relative to the stud. In a preferred embodiment, the clip includes adjustment members with tabs on their distal ends for adjusting the relative position of the legs and for holding the first and second clip parts together during initial assembly.

## Description

### Cross-Reference To Related Applications

This application claims priority under 35 U.S.C. §119(e) to provisional patent application serial number 60/132,667 filed May 5, 1999, entitled "Two-Piece Clip For Attachment To Metal Stud," the entire disclosure of which is incorporated herein by reference.

### Field of the Invention

The present invention relates generally to the art of support clips and brackets and, more particularly, to such clips or brackets for mounting devices, equipment or the like on wall studs. In even greater particularity, the present invention is directed to a two-piece sheet metal clip for mounting electrical boxes and other objects on metal or wood wall studs, one piece of the clip including at least one support member which engages the webbing of the stud to provide support for the box against inward flexing of the clip when force is applied inward of the box.

### Background of the Invention

In mounting electrical boxes or the like on wall studs, it is desirable to provide support to the electrical box to counter any flexing of the mounting means experienced as a result of inward force on the box. Moreover, it is also desirable to be able to adjust the position of the box according to the thickness of drywall being used. Some designs typically omit the extra needed support altogether and are not adjustable. Also, some designs incorporate a looping design which causes the clip to be more flimsy. These drawbacks can be extremely frustrating when attempting to complete electrical connections in the field. Accordingly, in view of the foregoing drawbacks with currently available clips, an improved adjustable clip for mounting objects on a wall stud is needed to overcome difficulties in support during installation and to provide benefits of costs and reliability.

### Summary of the Invention

Among the several objects of the present invention may be noted the provision of an improved two-piece sheet metal clip for mounting electrical boxes and other objects on metal or wood wall studs which includes at least on support member engaging the webbing or surface of the stud to provide support for the box against flexing of the clip when force is applied inward of the box; the provision of such a clip which is readily adjustable to accommodate drywall of different thicknesses; the provision of such a clip where the proper position of adjustment for a drywall of particular thickness is easily accomplished in the field; the provision of such clip which has added versatility in that it may be used in several different ways to secure electrical boxes or the like to wall studs; and the provision of such clip which is of economical manufacture.

It is also an object of the present invention to provide such a clip that is selectively mountable to either the open or closed side of a channel-shaped metal wall stud.

It is another object of the present invention to provide such a clip having stud gripping barbs or prongs in optimum location and spacings.

The clip of the present invention is particularly applicable in mounting electrical boxes and the like to the closed side of a channel-shaped metal wall stud. However, it will be appreciated that the invention has broader aspects, and that the clip can be used for mounting electrical boxes and the like to other types of studs.

In one embodiment of the present invention, a clip for mounting an object such as an electrical box on a stud is provided which comprises a first clip part engageable with the stud for securement of the clip to the stud; a second clip part engageable with the first clip part for holding the object on the clip; and at least one support member extending between the second clip part and a surface of the stud for substantially preventing flexing of the clip and inward movement of the object when a force is applied generally inwardly of the object. The first clip part includes a relatively flat leg and the second clip part includes a relatively flat leg extending in generally parallel face-to-face relation the leg of the first clip part. The at least one support member projects from the flat leg of the second clip part toward the surface of the stud and may include a turned lip portion for engaging the surface of the stud. Preferably, the clip includes a pair of support members extending between the second clip part and a surface of the stud for substantially preventing flexing of the clip and inward movement of the object when a force is applied generally inwardly of the object. Also, the leg of the second clip part may be slidable relative to the leg of the first clip part lengthwise of the leg of the first clip part thereby enabling selection of a position of the object being held by the second clip part relative to the stud. The clip may further include an alignment means for maintaining the leg of the second clip part in longitudinal alignment with the leg of the first clip part as the leg of the second clip part is slidably adjusted relative to the leg of the first clip part. Likewise, the clip may further include an adjustment means for adjusting the leg of the second clip part in selected positions of lengthwise adjustment relative to the leg of the first clip part. The clip may further include a fastener means for selectively locking the first and second clip parts in the selected positions of lengthwise adjustment as well as a temporary holding means for holding the first and second clip parts together during initial assembly. Also, the stud may be comprised of a metal stud and the clip may be attached to a closed side of the metal stud.

In another preferred embodiment of the present invention, a clip for mounting an object such as an electrical box on a stud is provided comprising a first clip part engageable with the stud for securement of the clip to the stud, the first clip part having a relatively fiat leg; a second clip part engageable with the first clip part for holding the object on the clip, the second clip part having a relatively flat leg extending in generally parallel face-to-face relation with the leg of said first clip part wherein the leg of the second clip part is slidable relative to the leg of the first clip part lengthwise of the leg of the first clip part thereby enabling selection of a position of the object being held by the second clip part relative to the stud; an alignment means for maintaining the leg of the second clip part in longitudinal alignment with the leg of the first clip part as the leg of the second clip part is slidably adjusted relative to the leg of said first clip part; and an adjustment means for adjusting the leg of the second clip part in selected positions of lengthwise adjustment relative to the leg of the first clip part, the adjustment means comprising two generally parallel rows of apertures through the leg of the first clip part and a pair of relatively short adjustment members formed in the leg of the second clip part whereby the adjustment members are receivable through a selected corresponding pair of the apertures to substantially prevent longitudinal movement of the leg of the first clip part relative to the leg of the second clip part. The clip may further include a support means for substantially preventing flexing of the clip and inward movement of the object when a force is applied generally inwardly of the object. Moreover, the clip may further include a fastener means for selectively locking the first and second clip parts in the selected positions of lengthwise adjustment. The clip may further include a temporary holding means for holding the first and second clip parts together during initial assembly. Also, the stud may be comprised of a metal stud and the clip may be attached to a closed side of the metal stud.

In another preferred embodiment of the present invention, a clip for mounting an object such as an electrical box on a stud is provided comprising a first clip part engageable with the stud for securement of the clip to the stud; a second clip part engageable with the first clip part for holding the object on the clip; and a temporary holding means for holding the first and second clip parts together during initial assembly.

These and other objects, features, and advantages of the present invention will become more fully apparent from the following description and appended claims, or may be learned by the practice of the invention as set forth hereinafter.

### Brief Description of the Drawings

In order to more fully understand the manner in which the above-recited and other advantages and objects of the invention are obtained, a more particular description of the invention will be rendered by reference to a specific preferred embodiment(s) thereof which is/are illustrated in the appended drawings. Note particularly that the appended drawings are not necessarily drawn to scale. Understanding that these drawings depict only typical embodiments of the invention and are not therefore to be considered to be limiting of its scope, the invention and its presently understood best mode for making and using the same will be described and explained with additional specificity and detail through the use of the accompanying drawings in which:
FIG. 1 is a front perspective view of a clip shown mounting an electrical box to a closed side of a channel-shaped metal wall stud, embodying features of the present invention;
FIG. 2 is a front perspective view of the clip of Figure 1 shown mounting an electrical box to a wooden stud having a rectangular cross-section, embodying features of the present invention;
FIG. 3 is an exploded front perspective view of the clip of Figure 1 showing the clip as comprising first and second clip parts, embodying features of the present invention;
FIG. 4 is a rear perspective view of the clip of Figure 1, showing the first and second clip parts in assembly, embodying features of the present invention;
FIG. 5 is a view of the first clip part in a flat configuration before bending, embodying features of the present invention;
FIG. 6 is a front elevational view of the first clip part, embodying features of the present invention;
FIG. 7 is a top plan view of the first clip part, embodying features of the present invention;

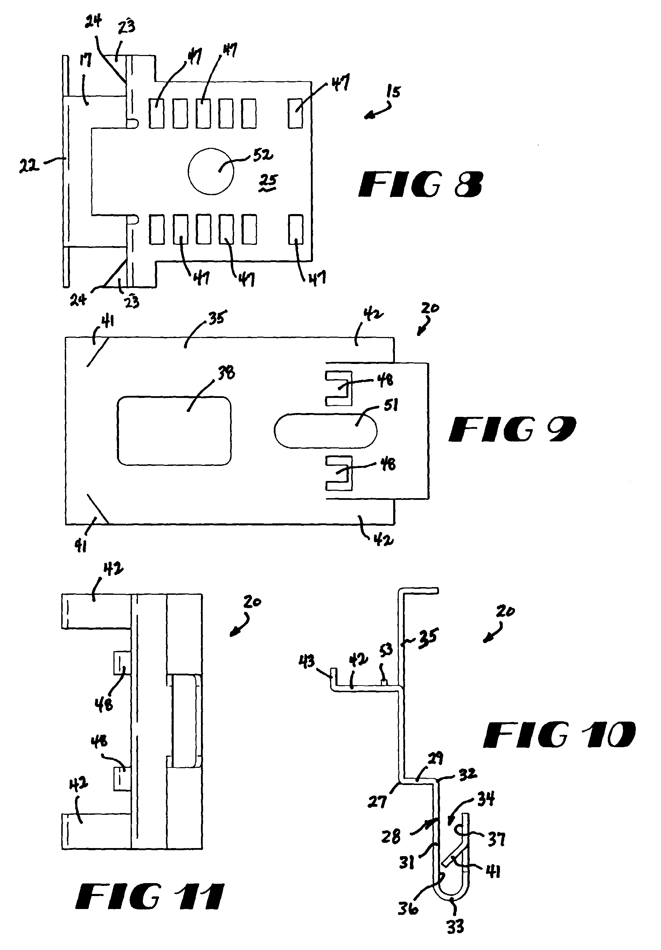

FIG. 8 is a right-side elevational view of the first clip part, embodying features of the present invention;
FIG. 9 is a view of the second clip part in a flat configuration before bending, embodying features of the present invention;
FIG. 10 is a top plan view of the second clip part, embodying features of the present invention;
FIG. 11 is a front elevational view of the second clip part, embodying features of the present invention;
FIG. 12 is a right-side elevational view of the second clip part, embodying features of the present invention; and
FIG. 13 is a top plan view of the clip of Figure 1, with the fastener means removed for clarity only, shown mounting an electrical box, in cross-section, to a closed side of a channel-shaped metal wall stud, embodying features of the present invention.

### Detailed Description

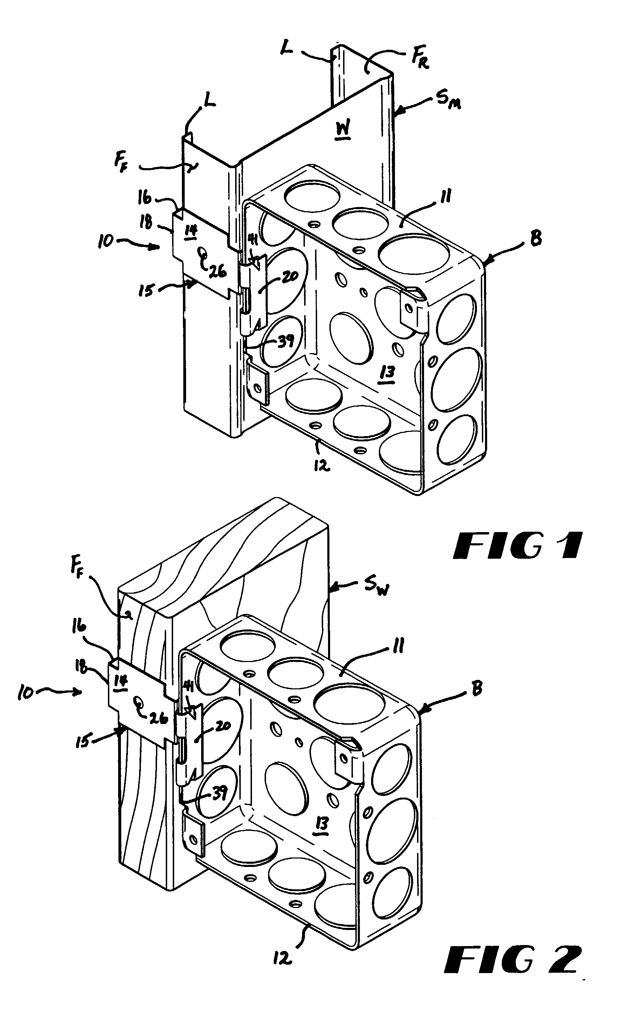

Refening to the drawings, a representative two-piece sheet metal clip for mounting an electrical box B and other objects on metal S_{M} or wood S_{W} wall studs, embodying various features the present invention, is generally indicated throughout the figures by reference character 10. Electrical box B is of a conventional type, and includes a generally rectangular peripheral side wall 11 having an open front end 12, and a rear end that is closed by a rear wall 13. The metal wall stud S_{M} illustrated in FIG. 1 is of generally channel shape having a web W surface at the closed side of the stud, and a pair of generally parallel opposing flange surfaces extending laterally outwardly and perpendicular from the web W surface. One flange F_{F} constitutes a front flange at the front of the stud and the other flange F_{R} constitutes a rear flange at the rear of the stud. Inwardly turned lip L surfaces are located at the outer edges of the flanges. The width of the flanges frequently varies from one manufacturer to another. In addition, the width of the lips L may also vary. While a metal stud is shown in FIG. 1, it will be understood that clip 10 of the present invention is also adapted for use with a conventional wood stud S_{W} of rectangular cross section, as illustrated in FIG. 2, which has a front face F_{F} at the front of the stud and a rear face F_{R} (not shown) at the rear of the stud. Also, for purposes of disclosure, the below discussion of clip 10, when applicable, relates to both the metal stud S_{M} and the wood stud S_{W}.

Clip 10 comprises a first clip part and a second clip part generally indicated at 15 and 20, respectively. For economical manufacture, the first clip part 15 (FIG. 5) and the second clip part 20 (FIG. 9) may be stamped individually from a flat sheet metal blank, preferably heat-treated and spring-tempered steel, then bent and integrally formed in accordance with a main bending profile so as to accommodate different wall stud sizes. As shown in FIGS. 1-3 and 13, the first clip part 15 is engageable with the front flange F_{F} surface of the stud S_{M} in a conventional manner for securing the clip 10 to the stud. The second clip part 20 holds the electrical box B to be mounted on the stud S_{M} and is engageable with the first clip part 15 and may be engageable, in a preferred embodiment, with the stud S_{M}.

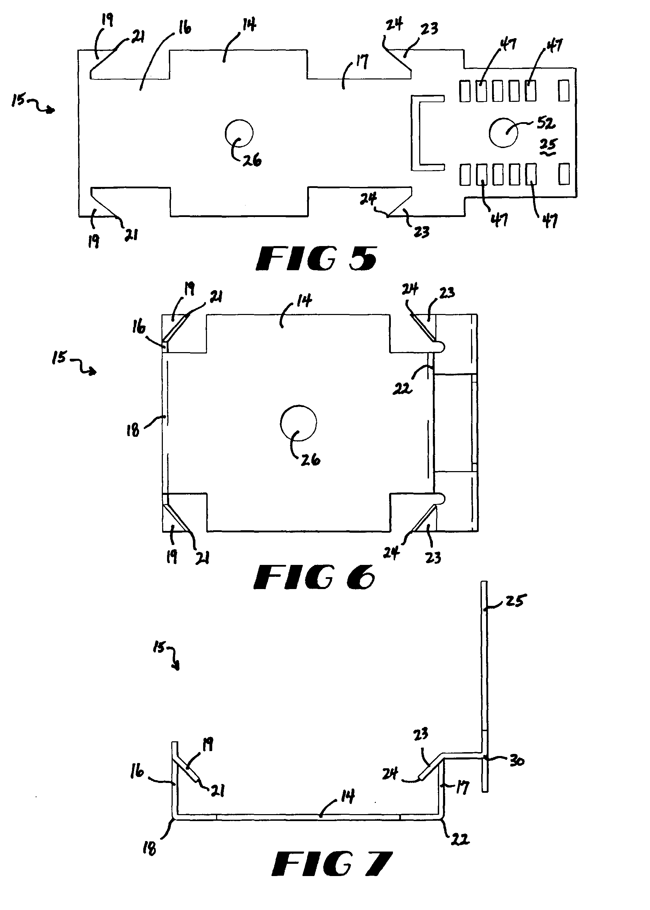

The first clip part 15 includes a middle portion 14, a first side portion 16 and a second side portion 17. The first side portion 16 extends generally upwardly, as viewed in FIGS. 7 and 13, from the left edge 18 of the middle portion 14. At least one barb or prong 19, preferably a first pair of barbs or prongs 19, extend downwardly from the first side portion 16 and terminate at pointed tips 21. The prongs 19 are bent so that they also project inwardly with respect to the middle portion 14. Similarly, the second side portion 17 extends generally upwardly, as viewed in FIGS. 7 and 13, from the right edge 22 of the middle portion 14. The second side portion 17 is bent outwardly, and at least one barb or prong 23, preferably a second pair of barbs or prongs 23, project downwardly and inwardly from the distal end of the second side portion 17 and terminate at pointed tips 24. A relatively flat leg 25 extends upwardly from the top edge 30 of the second side portion 17.

The lateral separation of the pointed tips 21, 24 of the first and second pair of prongs 19, 23 is sufficiently predetermined, typically less that the lateral width of the stud S_{M}, so that the pointed tips 21 of the first pair of prongs 19 are engageable with the forwardmost lip L surface and the pointed tips 24 of the second pair of prongs 23 are engageable with the web W surface so that the prongs 19, 23 grip the stud S_{M} to secure the first clip part 15 onto the front flange F_{F} surface of the stud S_{M} for securing the clip 10 to the stud S_{M}. Clip 10 may be further secured to the stud S_{M} by a fastener (not shown) such as a nail or screw received through a hole 26 in the middle portion 14 of the first clip part 15 and piercing the front flange F_{F} surface.

The second clip part 20 comprises a relatively flat leg 35 which, as best seen in FIG. 13, extends in a generally vertically oriented plane substantially parallel to the leg 25 of the first clip part 15. Extending generally downwardly from the bottom edge 27 of the leg 35 is a box clip arm, generally indicated at 28. The clip arm 28 includes a lateral portion 29 projecting generally laterally outwardly from the bottom edge 27 of leg 25, and a clip portion 31 extending downwardly from an outer edge 32 of the lateral portion 29 in a plane generally parallel to the plane of the leg 35. The lower end 33 of the clip portion 31, as best seen in FIGS. 10 and 13, curves back upon itself to form a horizontally extending, upwardly opening channel 34 having an inner wall 36 and an outer wall 37. An elongate opening 38 in the clip arm 28, as best seen in the flat configuration of the second clip part 20 (FIG. 9), facilitates forming of the clip portion 31 of the clip arm 28 and reduces the weight of the second clip part 20.

The channel 34 is adapted to receive a front edge 39 of the side wall 11 of the electrical box B (FIGS. 1, 2, 13). At least one barb or prong 41, preferably a third pair of barbs or prongs 41 having pointed tips, project inwardly and downwardly, as viewed in FIGS. 10 and 13, from the side edges of the outer wall 37 of the channel 34. The separation of these tips of the prongs 41 and the inner wall 36 of the channel 34 is preferably less than the thickness of the side wall 11 of the electrical box B so that the tips of the prongs 41 resiliently engage the side wall 11 of the electrical box B when it is received in the channel for securing the box B in a fixed position to the second clip part 20.

At least one support member 42 projects generally laterally inwardly, as viewed in FIGS. 10 and 13, preferably from the mid portion of the flat leg 35 of the second clip part 20, and preferably all the way to the web W surface of the stud S_{M}. In a preferred embodiment, the second clip part 20 utilizes a pair of support members 42. Each support member 42 includes an inwardly or outwardly turned lip portion 43 for engaging the web W surface during operation. When the clip 10 is attached to the stud S_{M} and the electrical box B is clipped onto the second clip part 20, as shown in FIG. 13, the support members 42 extend between the flat leg 35 and the webbing W surface of the stud S_{M} as a means to provide support for the box B when a force is applied inward of the box B, generally in the direction of arrow A (FIG. 13), against flexing of the clip 10. Moreover, when an inward force is applied generally in the direction of arrow A, the turned lip portions 43 of the support members 42 engage the webbing W surface of the stud as a means for supporting and substantially preventing any or further laterally inward movement of the box B.

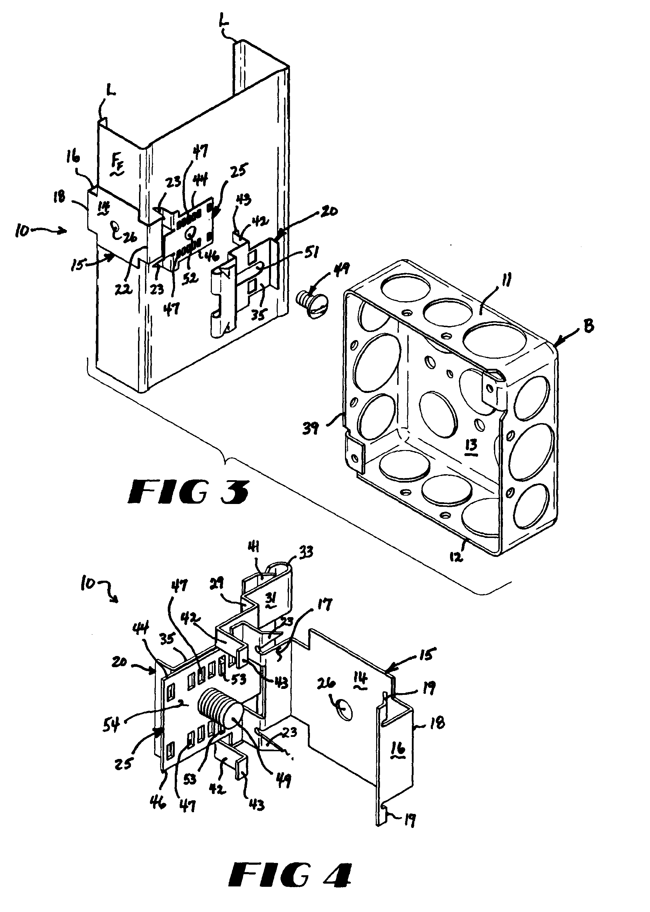

As best illustrated in FIGS. 3, 4 and 13, when the two clip parts 15, 20 are assembled, the flat leg 35 of the second clip part 20 is in generally parallel, face-to-face relation with the flat leg 25 of the first clip part 15. The leg 35 of the second clip part 20 is slidable relative to the leg 25 of the first clip part 15 lengthwise of the leg of the first clip part for adjusting the position of the electrical box B held by the second clip part in front-to-rear direction relative to the stud. The electrical box B may thus be adjusted according to the thickness of the drywall D mounted on the stud, so that the front of the electrical box B is immediately adjacent the front of an opening (not shown) in the drywall. It should be noted in this regard that it is important that the front of the electrical box B be slightly recessed into the drywall D a distance such that a cover plate (not shown) fastened to the box lies flush with the front of the drywall. The recessed position of the front of the electrical box B allows the mounting screws (not shown) of the cover plate to flex the cover plate slightly inwardly into the opening when the cover plate is mounted on the box so that the cover plate is held securely against the drywall. Because the thickness of drywall varies, it is necessary to adjust the position of the electrical box in front-to-rear direction to ensure a proper fit of the cover plate on the drywall.

In a preferred embodiment, the pair of support members 42 projecting from the flat leg 35 of the second clip part 20 also function as an alignment means for maintaining the leg 35 of the second clip part 20 in longitudinal alignment with the flat leg 25 of the first clip part 15 as the leg of the second clip part is slidably adjusted relative to the leg of the first clip part. As best seen in FIGS. 4 and 13, the support members 42 preferably extend generally inwardly (FIG. 13), with respect to the middle portion 14 of the first clip part 15, from the mid portion of leg 35 of the second clip part 20 and over opposite upper 44 and lower 46 edges of the leg 25 of the first clip part 15. The support members 42 define a guideway between them for receiving the leg 25 of the first clip part 15 to guide the leg of the first clip part lengthwise of the leg 35 of the second clip part 20.

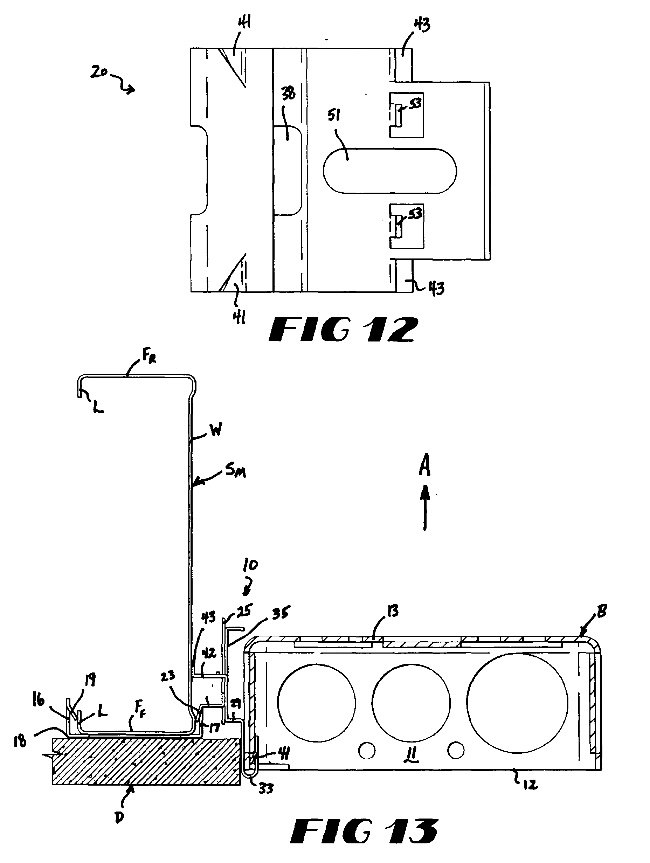

The leg 35 of the second clip part 20 is adjusted in a selected position of lengthwise adjustment relative to the leg 25 of the first clip part 15 by an adjustment means. In a preferred embodiment, the adjustment means includes two generally parallel rows of apertures 47 through the leg 25 of the first clip part 15 at equally spaced intervals adjacent the opposing upper 44 and lower 46 edges of the leg 25 of the first clip part 15. Each opposing pair of apertures 47 corresponds to a position of lengthwise adjustment of the leg 35 of the second clip part 20 relative to the leg 25 of the first clip part 15. As best illustrated in FIG. 11, the adjustment means further includes a pair of relatively short adjustment members 48 integrally formed in the leg 35 of the second clip part 20 and projecting generally inwardly (FIG. 13) toward the leg 25 of the first clip part 15. The pair of adjustment members 48 are receivable through a selected corresponding pair of apertures 47 in the leg 25 of the first clip part 15 to substantially prevent longitudinal movement of the legs 25, 35 relative to one another.

The guideway defined by the support members 42 substantially prevents the legs 25, 35 from twisting in their respective planes relative to each other as they are adjusted so that the adjustment members 48 are always received in corresponding respective apertures 47 which are aligned for maintaining the electrical box B in substantially vertical orientation. Also, the guideway assures proper alignment of the legs 25, 35 so that the plane including the front edge 39 of the electrical box B is maintained parallel with the drywall without exercise of special care on the part of a person adjusting the clip 10.

A fastener means, preferably a screw fastener 49, locks or secures the first and second clip parts 15, 20 in assembly. As best seen in FIGS. 3 and 4, the screw 49 is received through a slot 51 in the leg 35 of the second clip part 20, which extends lengthwise of the leg 35, and through an opening 52 in the leg 25 of the first clip part 15. The opening 52 is formed with a thread for engaging the thread of the screw 49. As shown in FIG. 4, the screw 49, when tightened, locks the adjustment members 48 in the selected apertures 47 so that the legs 25, 35 may not slide relative to each other, thus fixing the selected relative lengthwise position of the legs. The screw 49 may be loosened so that the legs 25, 35 can be pulled apart a relatively short distance sufficient for withdrawal of the adjustment members 48 from their selected pair of apertures 47 so that the leg 35 of the second clip part 20 can be slidably adjusted relative to the first clip part 15. Although the legs are pulled apart, the leg 25 of the first clip part 15 remains in the guideway between the support members 42 of the second clip part 20 so that the legs cannot be twisted out of lengthwise alignment during adjustment. The screw 49 may then be retightened to draw the legs 25, 35 together, as shown in FIGS. 4 and 13, for insertion of the adjustment members 48 into the newly selected apertures 47 to lock the legs in a newly selected position of adjustment.

The clip 10 is easily and accurately manipulated because the clip parts 15, 20 remain assembled during adjustment because of the fastener means so that the clip parts do not have to be held together by hand as they are being adjusted. In addition, however, the second clip part 20 includes a temporary holding means for holding the first and second clip parts 15, 20 together during initial assembly before screw 49 is installed so that the clip parts do not have to be held together by hand. In a preferred embodiment, the holding means comprises inwardly or outwardly turned tabs 53 at the distal ends of each adjustment member 48. Until screw 49 is operatively installed, the tabs 53 will engage an inside surface 54 of leg 25 of the first clip part 15 thereby holding the two clip parts 15, 20 together until screw 49 is installed, as best illustrated in FIG. 4.

It should also be understood that a permanent fastener may be applied to hold the legs 25, 35 of clip parts 15, 20 in a fixed, unalterable relative position such as when it is known that a large number of clips 10 are to be used with drywall of a single thickness.

Furthermore, while the clip 10 is shown attached to the closed side of the stud S_{M}, it should be understood that the length of the support members 42 may be adjusted to accommodate attachment of the clip 10 to the open side of the stud S_{M}. Moreover, support members 42 may be utilized and function substantially the same when clip 10 is attached to a wood stud S_{W}.

Although a preferred embodiment(s) of the present invention has been described above by way of example, it will be understood by those skilled in the field that modifications may be made to the disclosed embodiment(s) which are within the scope of the invention as defined by the appended claims.

## Claims

1. A clip for mounting an object such as an electrical box on a stud, said clip comprising:
(a) a first clip part engageable with said stud for securement of the clip to said stud;
(b) a second clip part engageable with said first clip part for holding said object on the clip; and
(c) at least one support member extending between said second clip part and a surface of said stud for substantially preventing flexing of the clip and inward movement of said object when a force is applied generally inwardly of said object.

2. A clip as defined in claim 1, wherein said first clip part includes a relatively flat leg.

3. A clip as defined in claim 2, wherein said second clip part includes a relatively flat leg extending in generally parallel face-to-face relation said leg of said first clip part.

4. A clip as defined in claim 3, wherein said at least one support member projects from said flat leg of said second clip part toward said surface of said stud.

5. A clip as defined in claim 4, wherein said at least one support member includes a turned lip portion for engaging said surface of said stud.

6. A clip as defined in claim 5, wherein the clip includes a pair of support members extending between said second clip part and a surface of said stud for substantially preventing flexing of the clip and inward movement of said object when a force is applied generally inwardly of said object.

7. A clip as defined in claim 6, wherein said leg of said second clip part is slidable relative to said leg of said first clip part lengthwise of said leg of said first clip part thereby enabling selection of a position of said object being held by said second clip part relative to said stud.

8. A clip as defined in claim 7, wherein the clip includes alignment means for maintaining said leg of said second clip part in longitudinal alignment with said leg of said first clip part as said leg of said second clip part is slidably adjusted relative to said leg of said first clip part.

9. A clip as defined in claim 7, wherein the clip further includes adjustment means for adjusting said leg of said second clip part in selected positions of lengthwise adjustment relative to said leg of said first clip part.

10. A clip as defined in claim 9, wherein the clip further includes fastener means for selectively locking said first and second clip parts in said selected positions of lengthwise adjustment.

11. A clip as defined in claim 10, wherein the clip further includes temporary holding means for holding said first and second clip parts together during initial assembly.

12. A clip as defined in claim 11, wherein said stud comprises a metal stud.

13. A clip as defined in claim 12, wherein the clip is attached to a closed side of said metal stud.

14. A clip for mounting an object such as an electrical box on a stud, said clip comprising:
(a) a first clip part engageable with said stud for securement of the clip to said stud, said first clip part having a relatively flat leg;
(b) a second clip part engageable with said first clip part for holding said object on the clip, said second clip part having a relatively flat leg extending in generally parallel face-to-face relation with said leg of said first clip part;
(c) wherein said leg of said second clip part is slidable relative to said leg of said first clip part lengthwise of said leg of said first clip part thereby enabling selection of a position of said object being held by said second clip part relative to said stud;
(d) alignment means for maintaining said leg of said second clip part in longitudinal alignment with said leg of said first clip part as said leg of said second clip part is slidably adjusted relative to said leg of said first clip part; and
(e) adjustment means for adjusting said leg of said second clip part in selected positions of lengthwise adjustment relative to said leg of said first clip part, said adjustment means comprising two generally parallel rows of apertures through said leg of said first clip part and a pair of relatively short adjustment members formed in said leg of said second clip part whereby said adjustment members are receivable through a selected corresponding pair of said apertures to substantially prevent longitudinal movement of said leg of said first clip part relative to said leg of said second clip part.

15. A clip as defined in claim 14, wherein the clip further includes support means for substantially preventing flexing of the clip and inward movement of said object when a force is applied generally inwardly of said object.

16. A clip as defined in claim 15, wherein the clip further includes fastener means for selectively locking said first and second clip parts in said selected positions of lengthwise adjustment.

17. A clip as defined in claim 16, wherein the clip further includes temporary holding means for holding said first and second clip parts together during initial assembly.

18. A clip as defined in claim 17, wherein said stud comprises a metal stud.

19. A clip as defined in claim 18, wherein the clip is attached to a closed side of said metal stud.

20. A clip for mounting an object such as an electrical box on a stud, said clip comprising:
(a) a first clip part engageable with said stud for securement of the clip to said stud;
(b) a second clip part engageable with said first clip part for holding said object on the clip; and
(c) temporary holding means for holding said first and second clip parts together during initial assembly.
